# EUROPEAN PATENT APPLICATION

(11) **EP 0 528 497 A1**
(43) Date of publication of application: **24.02.1993**
(21) Application number: 92202508.5
(22) Date of filing: 14.08.1992
(51) Int. Cl.: F22B 37/20, F28F 9/00, B23P 15/26

(54) **Method for assembling a tube module, a tube module, and a heat exchanger provided with such a tube module**

(30) Priority: 20.08.1991 NL 9101407
(71) Applicant: Stork Ketels B.V., NL-7553 LL Hengelo (NL)
(72) Inventor: Tönis, Hermanus Gerhardus, NL-7552 XH Hengelo (NL); Verhoeff, Ferdinand, NL-7552 NC Hengelo (NL)
(74) Representative: Prins, Hendrik Willem

(57) **Abstract**

The invention relates to a method for assembling a tube module which comprises a number of layers of tubes which are received in grid-like manner in protecting members arranged spread along the length of the tubes, comprising the steps of:
i) assembling a first layer of tubes on protecting member supports;
ii) arranging a tube comb at the height of the supports transversely over the first layer of tubes, wherein comb teeth extend between adjacent tubes;
iii) displacing tubes over the flat side of the tube comb remote from the comb teeth to form the second layer of tubes;
iv) repeating steps ii) and iii) until the number of tube layers is obtained; and
v) mutually fixing the tube combs while forming a protecting member,
to such a tube module and to a heat exchanger.

## Description

The present invention relates to a method for assembling a tube module, to a tube module for a heat exchanger and to a heat exchanger provided with at least one such tube module.

Such a tube module is intended for use in a heat exchanger in order to extract thermal energy from a hot gas flow. This thermal energy becomes available in the form of steam.

Such a heat exchanger can for instance be employed in a fired boiler and in a waste gas boiler which may optionally be provided upstream with a combustion unit.

The heated surface of a heat exchanger for a waste gas boiler is greater than in the case of fired boilers. In the latter, gases coming specifically from flames are guided along the pipe bundles. A waste gas boiler is however used for instance behind a gas turbine and the gas temperatures are therefore lower, for example up to 600°C. The output of an electrical power station equipped with a gas turbine can be increased by also converting the thermal energy present in the waste gases to electricity by means of a steam cycle.

A tube module applied in such a heat exchanger comprises a large number of tubes which are optionally provided with fins and which each have a length of about 10 to 20 metres and a weight of approximately 150 to 250 kg. The number of tubes per module amounts for instance to around 150. Thirty of such modules can for instance be used in a heat exchanger for a waste gas boiler.

In a tube module the mutually parallel tubes are interconnected at their head ends, wherein the tubes are received with clearance in protecting members arranged spread along their length which absorb the load of each tube.

The assembly of such a tube bundle is a time-consuming and labour-intensive process and requires a large workplace. As a result of the dimensions and weight of the tubes, one or more tubes must be handled separately using lifting machines.

The invention has for its object to provide a method for assembling such a tube module, wherein the above stated drawbacks are to a large extent avoided.

This is achieved according to the invention with a method for assembling a tube module which comprises a number of layers of tubes which are received in grid-like manner in protecting members arranged spread along the length of the tubes, comprising the steps of:
i) assembling a first layer of tubes on protecting member supports;
ii) arranging a tube comb at the height of the supports transversely over the first layer of tubes, wherein comb teeth extend between adjacent tubes;
iii) displacing tubes over the flat side of the tube comb remote from the comb teeth to form the second layer of tubes;
iv) repeating steps ii) and iii) until the number of tube layers is obtained; and
v) mutually fixing the tube combs while forming a protecting member.

By simply displacing the tubes for the first layer and the tubes for the subsequent layers over respectively the flat protecting member supports and the flat tube combs the layers of tubes can be assembled rapidly and simply, while lifting gear can in principle be dispensed with herein.

In order to ensure that during forming of each layer and prior to arranging of a tube comb the tubes already lie at a correct mutual pitch distance, it is recommended that during forming of a layer of tubes the tubes are placed with spacers at a mutual distance a equal to the pitch distance of the comb teeth.

Particularly if the tubes of adjacent layers are arranged mutually staggered, it is recommended that an edge spacer is guided on a comb support of a protecting member. The tubes of the subsequent layers can thus be positively aligned.

If the tubes intended for assembly of a tube module are supplied in a holder, the tubes can be handled relatively easily if more preferably the tubes are taken out of a holder by moving this holder relative to the protecting member supports.

The invention further relates to a tube module for a heat exchanger wherein a number of layers of tubes are received in grid-like manner in protecting members arranged along the length of the tubes, whereby a protecting member is constructed from stacked tube combs, comb teeth of which extend between adjacent tubes and a comb strip of which is flat on the side remote from the comb teeth, and on which comb strip rest tubes of a layer located thereabove.

In order to avoid tubes deforming or being damaged under the influence of the load from tubes located thereabove it is recommended that comb teeth of a tube comb rest on the flat side of a comb strip of a tube comb located thereunder. The load of each tube is thus transferred via the system of protecting members. The stability of such a protecting member is further improved if in further preference a tube comb is provided with at least one widened comb tooth which is provided on its free end with a recess in which is received the comb strip of the tube comb located thereunder. Thus created is an axial connection between the adjoining tube combs of a protecting member.

If in preference the tubes are provided with fins arranged along the length and whereof the pitch distance b is smaller than the width c of the comb strip on which the tubes rest, tubes which are received in a tube module and provided with fins arranged along the length can be slid out of the tube module while the grid form is preserved. This sliding is possible because a number of fins rest simultaneously on the flat side of the comb strip.

Finally, the invention relates to a heat exchanger provided with at least one tube module according to the invention.

Mentioned and other features of the method according to the invention for assembling a tube module, for the obtained tube module and for a heat exchanger provided with at least one tube module will be further elucidated in the light of the following description of a non-limitative embodiment given by way of example, wherein reference is made to the annexed drawing.

In the drawing:
figure 1 is a perspective, partly broken away view of a device with which the method according to the invention is performed;
figure 2 shows on a larger scale a perspective view of the assembly of a tube module according to the invention;
figure 3 shows detail III in figure 2;
figure 4 is a perspective and highly schematic view of a heat exchanger with a number of tube modules according to the invention; and
figure 5 and 6 show variants of detail V in figure 2 on a larger scale.

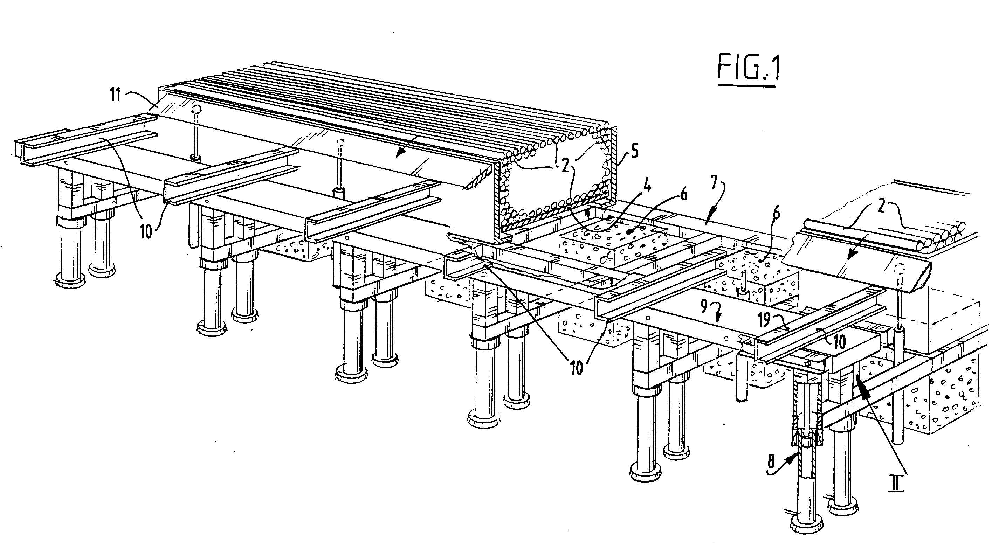

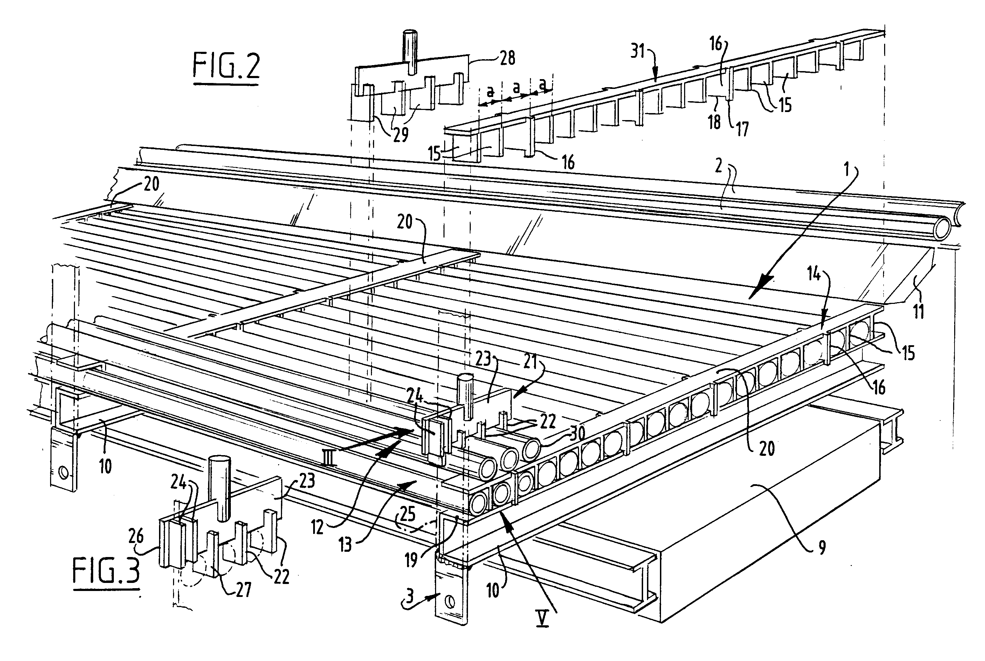

Figure 1 and 2 show the assembly of a tube module 1 according to the invention which comprises a number of layers of tubes 2 which are received in protecting members 3 arranged spread along the length of the tubes 2.

The tubes 2 are supplied in a holder 5 which is provided with a cut away bottom 4 and placed on a frame 7 above ejectors 6. Frame 7 is provided with lifting means 8 with which the frame 7 can be moved relative to the ejectors 6. Frame 7 is provided with a platform 9 onto which protecting member supports 10 are temporarily fixed.

By actuating the lifting means the tubes 2 can now be rolled out of the holder 5 over a fold-away guide plate 11 onto the protecting member supports 10.

Figure 2 shows the arrangement of a second layer 12 of tubes 2 on a first layer 13 of tubes 2. The tubes of the first layer 13 rest on the protecting member supports 10 and are held with clearance at a mutual distance using a tube comb 14, comb teeth 15 and 16 of which extend between adjacent tubes 2. The comb teeth 15 and 16 rest on the protecting member supports 10. The comb teeth 16 are widened and provided on the free end 17 with a recess 18 in which the smooth upper face 19 of a protecting member support is received.

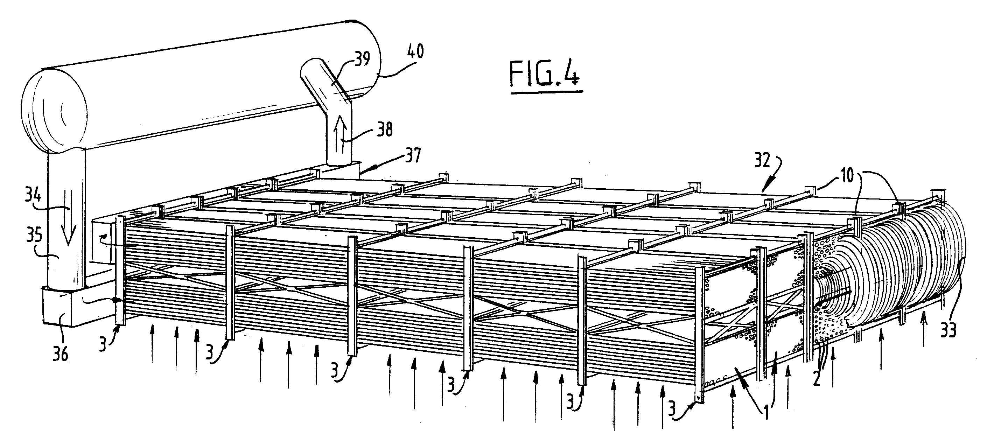

Tubes 2 for the second layer 12 now roll out of the holder 5 over plate 11 along a flat comb strip 20 of the tube comb 14. Using a spacer 21 the tubes 2 are oriented at a mutual distance a equal to the pitch distance of the comb teeth 15, 16. The spacer 21 is provided for this purpose with a strip 23 provided with teeth 22 and two guide ribs 24 with which the spacer 21 is guided along a side support 25 fixedly welded to the protecting member support 10. Since the tubes in the layers 12 and 13 are arranged mutually staggered, use is also made of another spacer 26 (figure 3) wherein the distance of the guide ribs 24 to the first tooth 27 is equal to the stagger distance between the tubes of the layers 12 and 13.

In the further arrangement of layer 12 successive spacers 28 are used, a tooth 29 of which is inserted behind an aligned tube 30 so that all tubes come to lie at the correct mutual pitch distance a. After all tubes 2 for the layer 12 have been rolled out and aligned on the comb strips 20 the following comb strip 31 is arranged, whereafter the spacers 21 or 26 and 28 are removed. The widened comb teeth 16 provide in the above described manner the axial positioning of the comb strip 31 relative to the comb strip 20. The above described construction then begins again for the following layer.

Figure 4 shows a heat exchanger 32 assembled from ten tube modules 1 according to the invention which are mutually connected via their protecting member supports 10. The head ends of the tubes 2 of the diverse tube modules 1 are mutually joined via connecting tubes 33. Medium 34 for heating, such as water, is fed via a fall pipe 35 and distributed via a manifold conduit 36. Heated medium 38, such as a mixture of water and steam, collected in a conduit 37 is discharged via a rise pipe 39, whereafter a steam/water separation takes place in a tank 40.

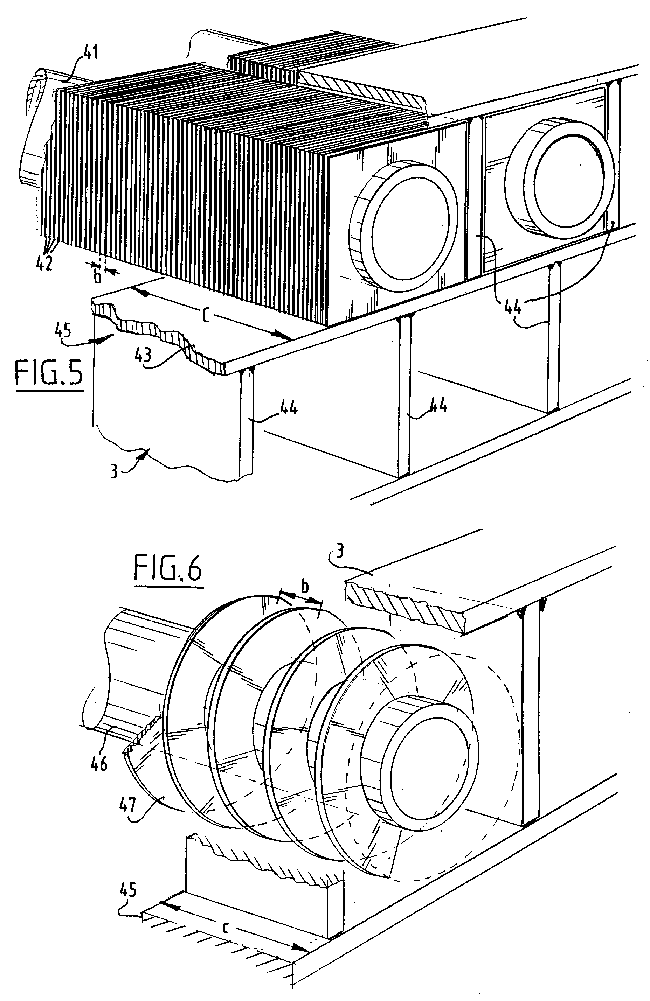

Figure 5 shows a variant in which the tubes 41 are provided with square fins 42 whereof a pitch distance b is smaller than the width c of a comb strip 43 of a tube comb 45 provided with teeth 44. The tubes 41 lie with clearance between the teeth 44 on the comb strip 43 in order to allow thermal expansion and contraction. These tubes 41 can moreover be exchanged.

Finally, figure 6 shows a tube 46 provided with a helically arranged fin 47, the pitch b of which is smaller than a tooth width c of a comb strip 43 of the tube comb 45. This tube 46 is also movable inside the tube module 1 according to the invention.

## Claims

1. Method for assembling a tube module which comprises a number of layers of tubes which are received in grid-like manner in protecting members arranged spread along the length of the tubes, comprising the steps of:
i) assembling a first layer of tubes on protecting member supports;
ii) arranging a tube comb at the height of the supports transversely over the first layer of tubes, wherein comb teeth extend between adjacent tubes;
iii) displacing tubes over the flat side of the tube comb remote from the comb teeth to form the second layer of tubes;
iv) repeating steps ii) and iii) until the number of tube layers is obtained; and
v) mutually fixing the tube combs while forming a protecting member.

2. Method as claimed in claim 1, wherein during forming of a layer of tubes the tubes are placed with spacers at a mutual distance a equal to the pitch distance of the comb teeth.

3. Method as claimed in claim 2, wherein an edge spacer is guided on a comb support of a protecting member.

4. Method as claimed in claims 1-3, wherein the tubes are taken out of a holder by moving this holder relative to the protecting member supports.

5. Tube module for a heat exchanger, wherein a number of layers of tubes are received in grid-like manner in protecting members arranged along the length of the tubes, wherein a protecting member is constructed from stacked tube combs, comb teeth of which extend between adjacent tubes and a comb strip of which is flat on the side remote from the comb teeth, and on which comb strip rest tubes of a layer located thereabove.

6. Tube module as claimed in claim 5, wherein comb teeth of a tube comb rest on the flat side of a comb strip of a tube comb located thereunder.

7. Tube module as claimed in claim 6, wherein a tube comb is provided with at least one widened comb tooth which is provided on its free end with a recess in which is received the comb strip of the tube comb located thereunder.

8. Tube module as claimed in claims 5-7, wherein the tubes are provided with fins which are arranged along the length and whereof the pitch distance b is smaller than the width c of the comb strip on which the tubes rest.

9. Heat exchanger provided with at least one tube module as claimed in claims 5-8 and/or assembled according to the method of claims 1-4.
